# EUROPÄISCHE PATENTSCHRIFT

(11) **EP 1 828 628 B1**
(45) Veröffentlichungstag und Bekanntmachung des Hinweises auf die Patenterteilung: **02.12.2009**
(21) Anmeldenummer: 05821593.0
(22) Anmeldetag: 21.12.2005
(51) Int. Cl.: F16C 11/06, F16J 3/04

(54) **KUGELGELENK, VORZUGSWEISE FÜR EINEN EINSATZ IN FAHRZEUGEN**
BALL JOINT, PREFERABLY FOR USE IN VEHICLES
JOINT A ROTULE S'UTILISANT NOTAMMENT DANS DES VEHICULES

(30) Priorität: 22.12.2004 DE 102004063013
(43) Veröffentlichungstag der Anmeldung: 05.09.2007
(73) Patentinhaber: ZF Friedrichshafen AG, 88038 Friedrichshafen (DE)
(72) Erfinder: BUDDE, Frank, 49439 Steinfeld-Mühlen (DE); THÖLKING, Markus, 49413 Dinklage (DE); ABELS, Olaf, 49401 Damme (DE); DÜSING, Werner, 49699 Lindern (DE)
(86) Internationale Anmeldenummer: PCT/DE2005/002309
(87) Internationale Veröffentlichungsnummer: WO 2006/066562

(56) Entgegenhaltungen:
- EP-A- 1 193 159
- US-B1- 6 357 956
- PATENT ABSTRACTS OF JAPAN Bd. 1999, Nr. 08, 30. Juni 1999 (1999-06-30) -& JP 11 063245 A (NOK CORP), 5. März 1999 (1999-03-05)
- PATENT ABSTRACTS OF JAPAN Bd. 014, Nr. 488 (M-1039), 24. Oktober 1990 (1990-10-24) -& JP 02 199317 A (MUSASHI SEIMITSU IND CO LTD), 7. August 1990 (1990-08-07)

## Beschreibung

Die Erfindung betrifft ein Kugelgelenk, vorzugsweise für einen Einsatz in Fahrzeugen, insbesondere im Bereich des Fahrwerkes von Kraftfahrzeugen, mit einem, eine Gelenköffnung aufweisenden Kugelgelenkgehäuse, mit einem im Kugelgelenkgehäuse angeordneten, sich durch die Gelenköffnung erstreckenden, einen Schaft aufweisenden Kugelzapfen, mit einem auf dem Schaft des Kugelzapfens angeordneten, einen radial verlaufenden Flansch aufweisenden Stützring und einem Dichtelement, das zwischen dem Stützring sowie einem angrenzenden Bauteil angeordnet ist, wobei das am Flansch (13) des Stützringes (5) und/oder im Flanschübergangsbereich (14), der die Verbindung zwischen dem Flansch (13) und einem axialen Erstreckungsbereich (12) des Stützringes (5) herstellt, ein mit dem Stützring (5) stoffschlüssig verbundener, mit mindestens einem Dichtsegment (16) versehener Profilkörper (15) angeordnet ist, der in zumindest einem Profilabschnitt über ein Dichtsegment (16) am Schaft (10) des Kugelzapfens (1) und/oder an einem Anschlussbauteil (11) anliegt.

Bei Kugelgelenken besteht regelmäßig die Notwendigkeit, die Relativbewegung der Gelenkteile zueinander ohne Funktionseinschränkungen zumindest über eine vorgegebene Einsatzdauer für den betreffenden Kugelgelenktyp zu gewährleisten. Dabei muss eine hinreichende Abdichtung gegen äußere Einflüsse, insbesondere gegen das Eindringen von Fremdkörpern und Feuchtigkeit, gegeben sein. Hierfür sind auf dem Kugelzapfen des Kugelgelenkes angeordnete Stützringe im Einsatz, auf denen das zapfenseitige Dichtlabyrinth eines Dichtungsbalges dichtend fixiert werden kann.

Die JP 11-063245 offenbart ein Kugelgelenk für Kraftfahrzeuge welches zwischen dem Gehäuse des Kugelgelenkes und einem die Gelenkkugel tragenden Kugelzapfen eine Dichtungsmanschette aus einem elastisch verformbaren Werkstoff aufweist.

In diesem Zusammenhang sind aus der JP 11-063245 und aus der DE-OS 37 05 847 Kugelgelenke für Kraftfahrzeuge bekannt, welche zwischen dem Gehäuse des Kugelgelenkes und einem die Gelenkkugel tragenden Kugelzapfen eine Dichtungsmanschette aus einem elastisch verformbaren Werkstoff aufweist. Zwischen der Lagerfläche der Dichtungsmanschette und dem Kugelzapfen ist ein auf dem Kugelzapfen haftend angeordneter Stützring eingesetzt, der mit der Lagerfläche der Dichtungsmanschette formschlüssig im Eingriff steht.

Die Abdichtung im Bereich des Stützringes erfolgt bei beiden genannten Lösungen, indem der Stützring mit einer Beschichtung aus einem elastischen Werkstoff versehen ist.

Die JP 02 199317 zeigt ein Kugelgelenk bei dem zur Abdichtung gegenüber dem Kugelzapfen ebenfalls ein Stützring eingesetzt wird, ähnlich wie bei den beiden zuvor genannten Dokumenten. Zur Unterstützung der Dichtwirkung ist der radiale Teil des Flansches derart ausgebildet, dass der Flansch nach Art einer Faltung umgelegt ist. Der Flansch ist in vier gleichen Segmenten umgelegt, wobei die vier Segmente allerdings unterbrochen sind. Die in Richtung Anschlussbauteil gehende Wirkung der umgelegten Flansche ist somit in Teilbereichen unterbrochen. Der umgelegte als auch der nicht umgelegte Teil der Flansche ist gerade ausgebildet und zeigt im Einbauzustand radial rechtwinklig vom Kugelzapfen weg.

Aus der DE 103 00 678 A1 ist weiterhin ein Kugelgelenk bekannt, das im Wesentlichen aus einem Kugelzapfen und einer Kugelpfanne zum Halten des Kopfes des Kugelzapfens mit einem dazwischen eingefügten Lager besteht. Des Weiteren verfügt das Kugelgelenk über einen Haltering, der ein zylindrisches Teil, das an einer Außenumfangsfläche des Schaftes des Kugelzapfens angebracht ist, und einen Flansch umfasst, der vom einem Ende des zylindrischen Teils des Halterings absteht und mit einem Befestigungswulst einer Muffe in engen Kontakt gelangt.

Im Rahmen dieser Lehre wird der Bereich, in welchem der Haltering an dem Schaft des Kugelzapfens angebracht ist, mit einem Dichtungsmittel gefüllt, das als Flüssigkeit in Ausnehmungen in diesem Bereich eindringt.

Der Erfindung liegt die Aufgabe zugrunde, ein Kugelgelenk derart weiter zu entwickeln bzw. dessen Dichtwirkung zu verbessern, dass dessen Funktionsfähigkeit unabhängig von der konkreten Bauform des Gelenkes über vergleichsweise lange Zeiträume erhalten bleibt, ohne durch Korrosionserscheinungen im Bereich des Kugelzapfens negativ beeinflusst zu sein.

Erfindungsgemäß wird die Aufgabe an einem Kugelgelenk der beschriebenen Art dadurch gelöst, dass am Flansch des Stützringes und/oder im Flanschübergangsbereich, der die Verbindung zwischen dem Flansch und einem axialen Erstreckungsbereich des Stützringes herstellt, ein mit dem Stützring stoffschlüssig verbundener, mit mindestens einem Dichtsegment versehener Profilkörper angeordnet ist, der in zumindest einem Profilabschnitt über ein Dichtsegment am Schaft des Kugelzapfens und/oder an einem Anschlussbauteil anliegt. Gemäß der Erfindung weist der Flansch des Stützringes mindestens eine die Dichtwirkung des Profilkörpers verstärkende Ausformung auf.

Die Erfindung ist mit dem Vorteil verbunden, dass auf der Grundlage der vorgegebenen Positionierung von Flansch bzw. Flanschübergangsbereich und Dichtsegment relativ zueinander und der auf den Einsatzfall abgestimmten Eigenschaften des zumindest einen Dichtsegmentes eine zuverlässige Dichtwirkung erzielt wird.

Zur Realisierung einer selektiv im kugelzapfennahen Bereich erforderlichen hohen Dichtwirkung besteht in Ausgestaltung der Erfindung die stoffschlüssige Verbindung zwischen dem Flanschübergangsbereich und dem Profilkörper. Der Profilkörper liegt dabei in einem oder mehreren seiner Profilabschnitte über zumindest ein Dichtsegment am Schaft des Kugelzapfens und/oder am Anschlussbauteil an.

In Umsetzung definierter Dichtverhältnisse längs des Flansches des Stützringes kann der Profilkörper mit dem Flansch und dem Flanschübergangsbereich des Stützringes stoffschlüssig verbundenen sein und über Dichtsegmente am Schaft des Kugelzapfens und/oder am Anschlussbauteil anliegen.
In bevorzugter Ausgestaltung der Erfindung weist der Profilkörper einen benachbarte Dichtsegmente verbindenden Basissteg auf. Mit diesem kann das Auslenkungsverhalten der Dichtsegmente bei Montage des Kugelgelenkes in Abhängigkeit von der Gestaltung der Übergangszonen vom Basissteg zu den Dichtsegmenten und als Funktion der Dicke des Basissteges gezielt beeinflusst werden.

Eine dauerhafte Verbindung der Profilkörper mit dem Flansch und/oder dem Flanschübergangsbereich des Stützringes kann zweckmäßig durch Vulkanisation, Verkleben oder anderweitig durch eine geeignete Haftverbindung erfolgen.

Auch besteht die Möglichkeit, zwischen benachbarten, auf das Anschlussbauteil gerichteten Ausformungen des Flansches des Stützringes ein Dichtsegment des Profilkörpers anzuordnen.

Alternativ oder in Ergänzung hierzu liegt es im Rahmen der Erfindung, dass die auf das Anschlussbauteil gerichteten Ausformungen des Flansches des Stützringes ein Dichtsegment des Profilkörpers tragen.

Werden die beiden vorgenannten Möglichkeiten in Kombination benutzt, so dass Ausformungen wie auch Zwischenräume zwischen den Ausformungen Dichtsegmente tragen, entsteht ein sehr effizientes und hinreichend redundantes Dichtsystem.

Die stoffschlüssig mit dem Flansch oder dem Flanschübergangsbereich des Stützringes verbundenen Profilkörper bestehen bevorzugt aus einem Elastomer oder einem thermoplastischen Elastomer (TPE). Weiterhin sind hierfür auch Hartschäume, wie etwa PU-Schaum, insbesondere in Abhängigkeit vom konkreten Einsatzbereich des Kugelgelenkes geeignet.

Der Gegenstand dieser Erfindung ist des Weiteren auf ein Kraftfahrzeug gerichtet, in dem die beanspruchten Kugelgelenke zum Einsatz kommen, dabei vorzugsweise in oder an Komponenten des Fahrwerkes des Kraftfahrzeuges.

Die Erfindung soll nachfolgend anhand eines Ausführungsbeispieles und zugehöriger Zeichnungen näher erläutert werden.

### Es zeigen

- Fig. 1: eine Übersichtsdarstellung einer als Kugelgelenk ausgeführten Gelenkverbindung mit erfindungsgemäßer Verbindung von Teilen eines Stützringes mit einem Profilkörper,
- Fig. 2: eine Darstellung der Einzelheit X gemäß Fig. 1 mit im eingebauten und damit vorgespannten Zustand befindlichen Profilkörper und
- Fig. 3 bis 5: Darstellungen der Einzelheit X gemäß Fig. 1 mit gegenüber Fig. 2 verändertem Profilkörper.

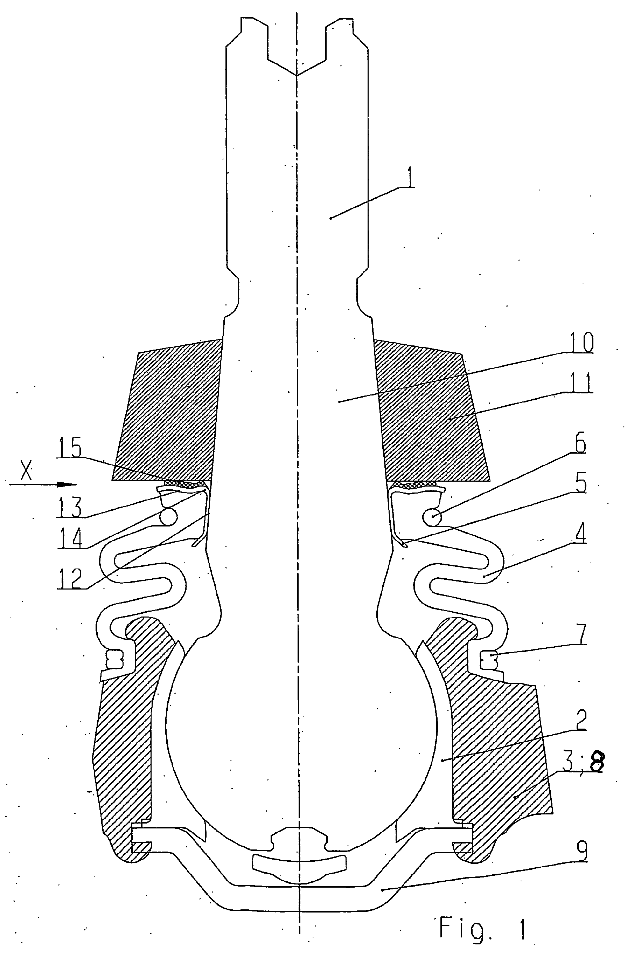

Bei der in Fig. 1 schematisch dargestellten Gelenkverbindung handelt es sich um ein dem Fachmann an sich bekanntes Kugelgelenk. Die Darstellung des Aufbaus des Kugelgelenkes kann sich daher auf die wichtigsten Elemente beschränken.

Das Kugelgelenk besteht im Wesentlichen aus einem Kugelzapfen 1, einer Lagerschale 2 und einem Gehäuse 3, das Kugelzapfen 1 und Lagerschale 2 zumindest teilweise umschließt. Die Abdichtung des Kugelgelenkes im Übergangsbereich vom Gehäuse 3 zum Kugelzapfen 1 erfolgt durch einen Dichtungsbalg 4, der mittels Stützring 5, Rundspannring 6 und Flachspannring 7 in Dichtposition gehalten wird und eine Relativlageänderung des Kugelzapfens 1 zum Gehäuse 3 ermöglicht.

Das Gehäuse 3 seinerseits ist zweiteilig ausgeführt und umfasst einen Gehäusegrundkörper 8 und einen Verschlussdeckel 9, der nach Einsetzen des Kugelzapfens 1 in den Gehäusegrundkörper 8 das Gehäuse 3 auf der dem Kugelzapfen 1 abgewandten Seite verschließt.

Der Kugelzapfen 1 verfügt über einen konisch verlaufenden Schaft 10, der kraftschlüssig mit einem Anschlussbauteil 11 verbunden ist und den Stützring 5 trägt, der seinerseits aus einem, am Schaft 10 des Kugelzapfens 1 anliegenden axialen Erstreckungsbereich 12, einen zum axialen Erstreckungsbereich 12 im Winkel verlaufenden Flansch 13 und einem Erstreckungsbereich 12 und Flansch 13 verbindenden Flanschübergangsbereich 14 gebildet ist.

Mit dem Flanschübergangsbereich 14 und dem Flansch 13 ist ein aus einem Elastomer bestehender, aus Profilabschnitten zusammengesetzter Profilkörper 15 durch Vulkanisation verbunden, der ein Dichtsegment 16 und einen Basissteg 17 aufweist und über das Dichtsegment 16 am Anschlussbauteil 11 dichtend anliegt. Alternativ oder auch ergänzend hierzu kann das Dichtsegment 16 am Schaft 10 des Kugelzapfens 1 anliegen.

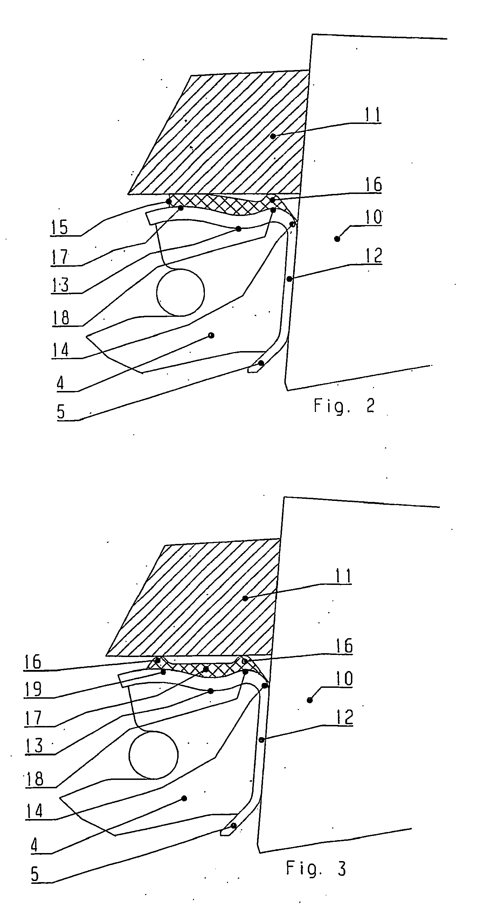

Zur Verstärkung der Dichtwirkung des Profilkörpers 15 ist im Flansch 13 des Stützringes 5 eine kugelzapfennahe Ausformung 18 vorgesehen, auf der das Dichtsegment 16 angeordnet ist, was insbesondere in Fig. 2 deutlich wird.

Bei der dargestellten Ausführungsform ist eine sichere Verbindung des aus Dichtsegment 16 und Basissteg 17 gebildeten Profilkörpers 15 mit dem betreffenden Flanschabschnitt des Stützringes 5 gegeben, auf deren Grundlage eine zuverlässige kugelzapfennahe Dichtfunktion des Dichtsegmentes 16 erreicht wird.

Gemäß der in Fig. 3 erfassten Dichtsituation zwischen dem Flansch 13 des Stützringes 5 und dem Anschlussbauteil 11 weist der Profilkörper 15 zwei Dichtsegmente 16 auf, die durch den Basissteg 17 verbunden sind. Im Flansch 13 des Stützringes 5 ist beabstandet zur kugelzapfennahen Ausformung 18 eine weitere Ausformung 19 vorgesehen, denen jeweils ein Dichtsegment 16 zugeordnet ist, so dass hiermit eine auf Grundlage der gegebenen Redundanz besonders zuverlässige Abdichtung geschaffen werden kann.

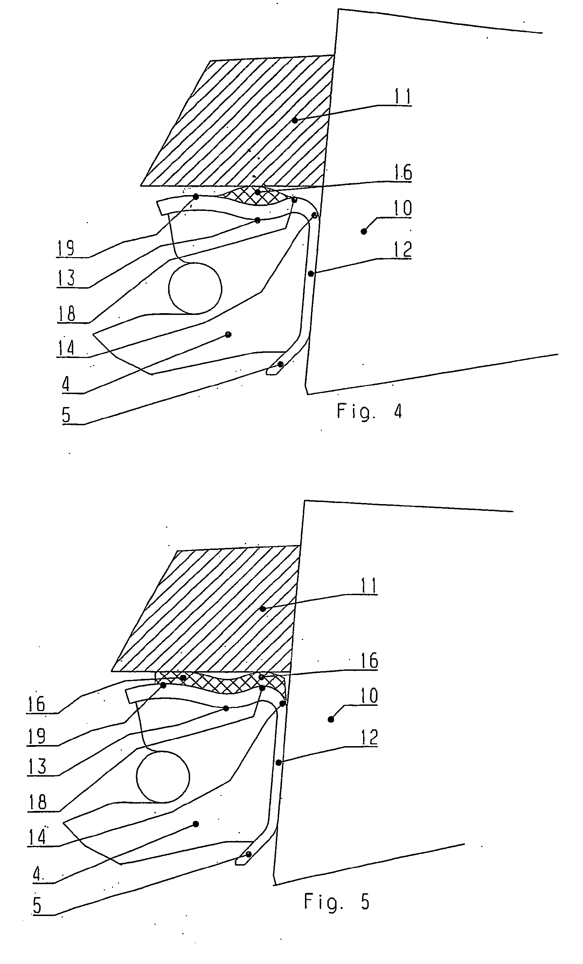

Weiterhin besteht die Möglichkeit, die Abdichtung im Bereich des Flansches 13 des Stützringes 5 durch ein Dichtsegment 16 zu realisieren, das im Bereich zwischen den Ausformungen 18 und 19 mit dem Flansch 13 des Stützringes 5 verbunden ist, wie in Fig. 4 dargestellt.

Auch kann gemäß der Darstellung in Fig. 5 eine Angleichung von Dichtsegment 16 und Basissteg 17 derart erfolgen, dass der Profilkörper 15 schichtähnlich ausgebildet ist und seine Profilierung im Wesentlichen über eine oder mehrere Ausformungen 18, 19 im Flansch 13 oder Flanschübergangsbereich 14 erhält

Unabhängig von der konkreten Gestaltung des Profilkörpers 15, wie sie beispielhaft in den Fig. 2 bis 5 erfasst ist, kann der Flanschübergangsbereich 14 selbst als für die Dichtfunktion relevante Ausformung 18 gestaltet sein, so dass gegebenenfalls auf weitere Ausformungen im Bereich des Flansches 13 des Stützringes 5 verzichtet werden kann.

Mit der hier vorgestellten, nicht auf die Ausführungsbeispiele beschränkten Lösung, die im Wesentlichen auf die permanente Verbindung eines Stützringes mit einem oder mehreren Profilkörpern und die Auswahl geeigneter Dichtsegmente als Bestandteil des jeweiligen Profilkörpers zurückgeht, wird eine sehr zuverlässige und dauerhafte Abdichtung zwischen Dichtungsbalg, Stützring, Profilkörper und Anschlussbauteil erreicht.

### Bezugszeichenliste

- 1 -: Kugelzapfen
- 2 -: Lagerschale
- 3 -: Gehäuse
- 4 -: Dichtungsbalg
- 5 -: Stützring
- 6 -: Rundspannring
- 7 -: Flachspannring
- 8 -: Gehäusegrundkörper
- 9 -: Verschlussdeckel
- 10 -: Schaft
- 11 -: Anschlussbauteil
- 12 -: axialer Erstreckungsbereich
- 13 -: Flansch
- 14 -: Flanschübergangsbereich
- 15 -: Profilkörper
- 16 -: Dichtsegment
- 17 -: Basissteg
- 18 -: kugelzapfennahe Ausformung
- 19 -: weitere Ausformung

## Patentansprüche

1. Kugelgelenk, vorzugsweise für einen Einsatz in Fahrzeugen, insbesondere im Bereich des Fahrwerkes von Kraftfahrzeugen, mit einem, eine Gelenköffnung aufweisenden Kugelgelenkgehäuse (3), mit einem im Kugelgelenkgehäuse (3) angeordneten, sich durch die Gelenköffnung erstreckenden, einen Schaft (10) aufweisenden Kugelzapfen (1), mit einem auf dem Schaft (10) des Kugelzapfens (1) angeordneten, einen radial verlaufenden Flansch (13) aufweisenden Stützring (5) und einem Dichtelement (15), das zwischen dem Stützring (5) sowie einem angrenzenden Bauteil (11) angeordnet ist, wobei das am Flansch (13) des Stützringes (5) und/oder im Flanschübergangsbereich (14), der die Verbindung zwischen dem Flansch (13) und einem axialen Erstreckungsbereich (12) des Stützringes (5) herstellt, ein mit dem Stützring (5) stoffschlüssig verbundener, mit mindestens einem Dichtsegment (16) versehener Profilkörper (15) angeordnet ist, der in zumindest einem Profilabschnitt über ein Dichtsegment (16) am Schaft (10) des Kugelzapfens (1) und/oder an einem Anschlussbauteil (11) anliegt,
**dadurch gekennzeichnet, dass** der Flansch (13) des Stützringes (5) mindestens eine die Dichtwirkung des Profilkörpers (15) verstärkende Ausformung (18, 19) aufweist.

2. Kugelgelenk nach Anspruch 1, **dadurch gekennzeichnet, dass** eine stoffschlüssige Verbindung zwischen dem Flanschübergangsbereich (14) und dem Profilkörper (15) besteht und der Profilkörper (15) in einem Profilabschnitt über zumindest ein Dichtsegment (16) am Schaft (10) des Kugelzapfens (1) und/oder am Anschlussbauteil (11) anliegt.

3. Kugelgelenk nach Anspruch 1, **dadurch gekennzeichnet, dass** der Profilkörper (15) mit dem Flansch (13) und dem Flanschübergangsbereich (14) des Stützringes (5) stoffschlüssig verbundenen ist und über Dichtsegmente (16) am Schaft (10) des Kugelzapfens (1) und/oder am Anschlussbauteil (11) anliegt.

4. Kugelgelenk nach Anspruch 2 oder 3, **dadurch gekennzeichnet, dass** der Profilkörper (15) einen benachbarte Dichtsegmente (16) verbindenden Basissteg (17) aufweist.

5. Kugelgelenk nach Anspruch 1, **dadurch gekennzeichnet, dass** der Profilkörper (15) durch Vulkanisation, Verkleben oder eine anderweitige Haftverbindung mit dem Flansch (13) und/oder dem Flanschübergangsbereich (14) des Stützringes (5) verbunden ist.

6. Kugelgelenk nach Anspruch 1, **dadurch gekennzeichnet, dass** zwischen benachbarten, auf das Anschlussbauteil (11) gerichtete Ausformungen (18, 19) des Flansches (13) des Stützringes (5) ein Dichtsegment (16) des Profilkörpers (15) Aufnahme findet.

7. Kugelgelenk nach Anspruch 1, **dadurch gekennzeichnet, dass** auf das Anschlussbauteil (11) gerichtete Ausformungen (18, 19) des Flansches (13) des Stützringes (5) ein Dichtsegment (16) des Profilkörpers (15) tragen.

8. Kugelgelenk nach Anspruch 1, **dadurch gekennzeichnet, dass** der Profilkörper (15) aus einem Elastomer, einem thermoplastischen Elastomer (TPE) oder einem Hartschaum, ggf. einem PU-Schaum, besteht.

9. Kraftfahrzeug mit Kugelgelenke aufweisenden Fahrwerkskomponenten,
**dadurch gekennzeichnet, dass** Kugelgelenke gemäß einem der Ansprüche 1 bis 8 ausgebildet sind.

## Claims

1. Ball joint, preferably for use in vehicles, in particular in the region of the chassis of motor vehicles, comprising a ball joint housing (3) with a joint opening, comprising a ball pin (1) that is disposed in the ball joint housing (3), extends through the joint opening and has a shank (10), comprising a support ring (5) that is disposed on the shank of the ball pin (1) and has a radially extending flange (13) as well as a sealing element (15) that is disposed between the support ring (5) and an adjoining component (11), wherein the on the flange (13) of the support ring (5) and/or in the flange transition region (14), which establishes the connection between the flange (13) and an axially extending region (12) of the support ring (5), a profile body (15) connected cohesively to the support ring (5) and provided with at least one sealing segment (16) is disposed, which in at least one profile portion rests via a sealing segment (16) against the shank (10) of the ball pin (1) and/or against a connecting component (11),
**characterized in that** the flange (13) of the support ring (5) comprises at least one projection (18, 19) that boosts the sealing action of the profile body (15).

2. Ball joint according to claim 1, **characterized in that** there is a cohesive connection between the flange transition region (14) and the profile body (15) and the profile body (15) in a profile portion rests via at least one sealing segment (16) against the shank (10) of the ball pin (1) and/or against the connecting component (11).

3. Ball joint according to claim 1, **characterized in that** the profile body (15) is cohesively connected to the flange (13) and the flange transition region (14) of the support ring (5) and rests via sealing segments (16) against the shank (10) of the ball pin (1) and/or against the connecting component (11).

4. Ball joint according to claim 2 or 3, **characterized in that** the profile body (15) comprises a basic web (17) that connects adjacent sealing segments (16).

5. Ball joint according to claim 1, **characterized in that** the profile body (15) is connected by vulcanization, gluing or some other adhesive connection to the flange (13) and/or the flange transition region (14) of the support ring (5).

6. Ball joint according to claim 1, **characterized in that** between adjacent projections (18, 19) of the flange (13) of the support ring (5) that are oriented towards the connecting component (11) a sealing segment (16) of the profile body (15) is received.

7. Ball joint according to claim 1, **characterized in that** projections (18, 19) of the flange (13) of the support ring (5) that are oriented towards the connecting component (11) carry a sealing segment (16) of the profile body (15).

8. Ball joint according to claim 1, **characterized in that** the profile body (15) is made of an elastomer, a thermoplastic elastomer (TPE) or a rigid foam, optionally a PU foam.

9. Motor vehicle having chassis components comprising ball joints, **characterized in that** ball joints according to one of claims 1 to 8 are formed.

## Revendications

1. Joint à rotule, de préférence pour une utilisation sur véhicule, en particulier dans la zone du système porteur d'un véhicule automobile, avec un boîtier de joint à rotule (3) présentant une ouverture de joint, avec un pivot à rotule (1) disposé dans le boîtier de joint à rotule (3), s'étendant à travers l'ouverture de joint et présentant une tige (10), avec une bague d'appui (5) disposée sur la tige (10) du pivot à rotule (1) et présentant une bride (13) s'étendant radialement, et avec un élément d'étanchéité (15) qui est disposé entre la bague d'appui (5) ainsi qu'un composant adjacent (11), dans lequel un corps profilé (15) relié par contact de matière à la bague d'appui (5) et muni d'au moins un segment d'étanchéité (16) est disposé au niveau de la bride (13) de la bague d'appui (5) et/ou dans la zone de transition de bride (14) qui établit la connexion entre la bride (13) et une zone d'extension axiale (12) de la bague d'appui (5), ledit corps profilé (15) s'appliquant au moins dans une portion profilée par l'intermédiaire d'un segment d'étanchéité (16) contre la tige (10) du pivot à rotule (1) et/ou contre un composant de raccordement (11), **caractérisé en ce que** la bride (13) de la bague d'appui (5) présente au moins une protubérance (18, 19) renforçant l'effet d'étanchéité du corps profilé (15).

2. Joint à rotule selon la revendication 1, **caractérisé en ce qu'**une connexion par contact de matière existe entre la zone de transition de bride (14) et le corps profilé (15) et le corps profilé (15) s'applique dans une portion profilée par l'intermédiaire d'au moins un segment d'étanchéité (16) contre la tige (10) du pivot à rotule (1) et/ou contre le composant de raccordement (11).

3. Joint à rotule selon la revendication 1, **caractérisé en ce que** le corps profilé (15) est relié à la bride (13) et à la zone de transition de bride (14) de la bague d'appui (5) par contact de matière et s'applique par l'intermédiaire de segments d'étanchéité (16) contre la tige (10) du pivot à rotule (1) et/ou contre le composant de raccordement (11).

4. Joint à rotule selon les revendications 2 ou 3, **caractérisé en ce que** le corps profilé (15) présente une entretoise de base (17) reliant des segments d'étanchéité (16) voisins.

5. Joint à rotule selon la revendication 1, **caractérisé en ce que** le corps profilé (15) est relié à la bride (13) et/ou à la zone de transition de bride (14) de la bague d'appui (5) par vulcanisation, collage ou un autre assemblage par adhérence.

6. Joint à rotule selon la revendication 1, **caractérisé en ce qu'**entre des protubérances (18, 19) voisines, tournées vers le composant de raccordement (11), de la bride (13) de la bague d'appui (5) est reçu un segment d'étanchéité (16) du corps profilé (15).

7. Joint à rotule selon la revendication 1, **caractérisé en ce que** des protubérances (18, 19), tournées vers le composant de raccordement (11), de la bride (13) de la bague d'appui (5) portent un segment d'étanchéité (16) du corps profilé (15).

8. Joint à rotule selon la revendication 1, **caractérisé en ce que** le corps profilé (15) se compose d'un élastomère, d'un élastomère thermoplastique (TPE) ou d'une mousse à haute résistance, éventuellement d'une mousse de PU.

9. Véhicule automobile avec des composants de système porteur présentant des joints à rotule, **caractérisé en ce que** des joints à rotule sont réalisés selon l'une quelconque des revendications 1 à 8.
